## Europäisches Patentamt
## European Patent Office
## Office européen des brevets

(11) Veröffentlichungsnummer: **0 334 092 B1**

# EUROPÄISCHE PATENTSCHRIFT

(45) Veröffentlichungstag der Patentschrift:
08.05.91 Patentblatt 91/19

(51) Int. Cl.⁵: **B29B 7/60**

(21) Anmeldenummer: **89103944.8**

(22) Anmeldetag: **07.03.89**

(54) **Verfahren und Vorrichtung zum Mischen und Einfärben von Mehrkomponenten-Kunststoffen, insbesondere Polyurethan.**

(30) Priorität: **12.03.88 DE 3808352**

(43) Veröffentlichungstag der Anmeldung:
27.09.89 Patentblatt 89/39

(45) Bekanntmachung des Hinweises auf die
Patenterteilung:
08.05.91 Patentblatt 91/19

(84) Benannte Vertragsstaaten:
DE FR GB IT SE

(56) Entgegenhaltungen:
EP-A- 0 176 140
FR-A- 1 405 984
GB-A- 1 377 639
GB-A- 2 133 775
US-A- 3 851 798

(73) Patentinhaber: **ELASTOGRAN POLYURETHANE GMBH**
Landwehrweg
W-2844 Lemförde (DE)

(72) Erfinder: **Lisker, Norbert**
Buergermeister-Schwaiger-Strasse 15
W-8190 Wolfratshausen (DE)
Erfinder: **Reisinger, Gerhard**
Zugspitzstrasse 5
W-8025 Unterhaching (DE)
Erfinder: **Taubenmann, Peter**
Strindbergstrasse 1
W-8000 Muenchen (DE)

(74) Vertreter: **Springer, Hans Jörg, Dr. et al**
BASF Aktiengesellschaft Patentabteilung
Carl-Bosch-Strasse 38
W-6700 Ludwigshafen (DE)

**Beschreibung**

Die Erfindung betrifft ein Verfahren nach dem Oberbegriff des Patentanspruches 1 sowie eine Vorrichtung nach dem Oberbegriff des Patentanspruches 3.

Üblicherweise arbeiten Verfahren und Vorrichtung zum Mischen und Einfärben von derartigen Kunststoffteilen so, daß der einen Kunststoffkomponente, nämlich dem Polyol, die Farbmischung mit der gewünschten Farbrezeptur vor dem Einführen in die Mischkammer zugegeben wird, d.h., Polyol und Farbpigmente werden in einem Vorratstank oder in einem besonderen Behälter vorgemischt. Dieses eingefärbte Polyol wird dann mit einem Isocyanat als zweite Komponente vermischt.

Die benutzten Farbpigmente sind außerordentlich intensiv, d.h. es genügen geringe Mengen, um den gewünschten Farbton zu erzeugen. Um eine Umstellung bei der Herstellung und Mischung von einer Farbmischung auf eine andere durchzuführen, ist bei diesem bekannten Verfahren ein großer Reinigungsaufwand erforderlich. Es muß sichergestellt sein, daß in dem Vorratstank bzw. Behälter keine nicht der Rezeptur entsprechenden Farbpigmente verblieben sind. Weiterhin müssen die Mischkammer und die Leitungen vollständig sauber sein. Um Kunststoffteile in kleinen Stückzahlen mit unterschiedlichen Farben herzustellen, ist dieses Verfahren sehr aufwendig und ggf. nicht wirtschaftlich.

Es ist daher auch schon vorgeschlagen worden, die vorher nach dem gewünschten Farbton gemischten Farbpigmente nicht in der Kunststoffkomponente Polyol anzusetzen, sondern diese Farbmischung direkt in die Mischkammer einzubringen und dort mit den Kunststoffkomponenten zu vermischen. In diesem Fall bleiben die beiden Kunststoffkomponenten vor dem Eingeben in die Mischkammer ungefärbt. Eine Farbumstellung ist bei dieser Arbeitsweise einfacher, da nur die "Farbkomponente" getauscht werden muß. Dieses erfolgt beispielsweise dadurch, daß das komplette Farbaggregat mit den Schläuchen und dem zugehörigen Düsenhalter von der Mischkammer getrennt und ausgetauscht wird. Ein Farbwechsel in einem solchen separaten Farbaggregat ist aber auch mit einem hohen Reinigungsaufwand verbunden. Insbesondere bei der Umstellung von dunklen Farben auf helle Farben, ist es wegen der intensiven Farbwicklung erforderlich, ein solches Aggregat nicht nur zu reinigen, sondern regelrecht zu zerlegen. Eine Reinigung durch Spülen würde sehr große Mengen an Lösungsmittel erfordern und wäre dennoch mit dem Risiko behaftet, daß die Reinigung nicht vollständig ist. Weiterhin bedeutet die Verwendung von Lösungsmittel eine starke Umweltbelastung, die, wenn sie kompensiert werden soll, wiederum zu zusätzlichen Kosten führt.

Auf bestimmten Anwendungsgebieten, z.B. bei der Herstellung von Schuhsohlen, fordern die Anwender häufig mehr als zwanzig verschiedene Farbtöne für ihre Produkte. Dieses ist mit hohem Aufwand und mit entsprechend hohen Kosten verbunden. Jede Umstellung bedeutet Produktionsverluste. Farbänderungen müssen sorgfältig geplant werden und eine plötzliche individuelle Umstellung ist zumindest aus Kostengründen nicht möglich. Eine schnelle und flexible Bedienung von Kundenwünschen auch für kleinere Stückzahlen ist daher schwierig oder sogar unmöglich.

Der Erfindung liegt nun die Aufgabe zugrunde, ein Verfahren und eine Vorrichtung der eingangs genannten Art zu schaffen, bei dem ein Farbwechsel einfacher und ohne unvertretbare hohe Kosten auch bei in kleinen Stückzahlen herzustellenden Kunststoffgegenständen möglich ist.

Diese Aufgabe wird bei einem Verfahren nach den Merkmalen des Anspruches 1 und bei einer entsprechenden Vorrichtung nach den Merkmalen des Anspruches 3 gelöst.

Erfindungsgemäß werden die verschiedenen, den gewünschten Farbton bestimmenden Farbpigmente, also nicht vor dem Einführen in die Mischkammer – ob nun zusammen mit dem Polyol oder getrennt von den Kunststoffkomponenten – vermischt, sondern die einzelnen Grundfarbpigmente treffen erst in der Mischkammer aufeinander. Da sich Farbtöne bekanntlich aus wenigen Grundfarben erzeugen lassen, zu denen neben schwarz und weiß die Komplementärfarben rot, gelb und blau gehören, genügt eine relativ geringe Anzahl von Farbleitungen, die zusätzlich zu den Leitungen für die Kunststoffkomponenten in die Mischkammer führen. Die Mengen der Farbpigmente, die in die Mischkammer eingegeben werden, können im voraus entsprechend dem gewünschten Farbton festgelegt werden, und dieser Farbton läßt sich durch Veränderung der einzelnen Grundfarbtonmenge schnell und einfach wechseln.

Es wird also eine Möglichkeit geschaffen, in die Mischkammer die einzelnen Grundfarbpigmente getrennt einzuführen und gemäß der vorgegebenen Rezeptur zusammenzusetzen und dort zu vermischen, wobei die Menge der einzelnen Grundfarbkomponenten leicht und einfach veränderbar und vorwählbar ist, und zwar bis zum "Nicht-Einführen" einer oder mehrerer Grundfarbpigmente.

Hierdurch wird der Mischvorgang als solcher vereinfacht und insbesondere werden komplizierte Reinigungsmaßnahmen vermieden. Es ist leicht möglich, von Mischvorgang zu Mischvorgang die Farben zu ändern und feine Farbabstufungen vorzunehmen. Hierdurch kann auf Kundenwünsche schnell reagiert werden und die Fertigung wird insgesamt vereinfacht und flexibler. Auch wird die Lagerhaltung von Farbpigmenten vereinfacht, da nur noch wenige Grundfarben gelagert werden müssen.

Abfälle von vorgemischten, aber nicht vollständig benötigten Farbmischungen, treten nicht auf.

Weitere Ausgestaltungen des Erfindung sind in den Merkmalen des abhängigen Ansprüche beschrieben.

Im folgenden wird die Erfindung anhand eines Ausführungsbeispiels näher erläutert.

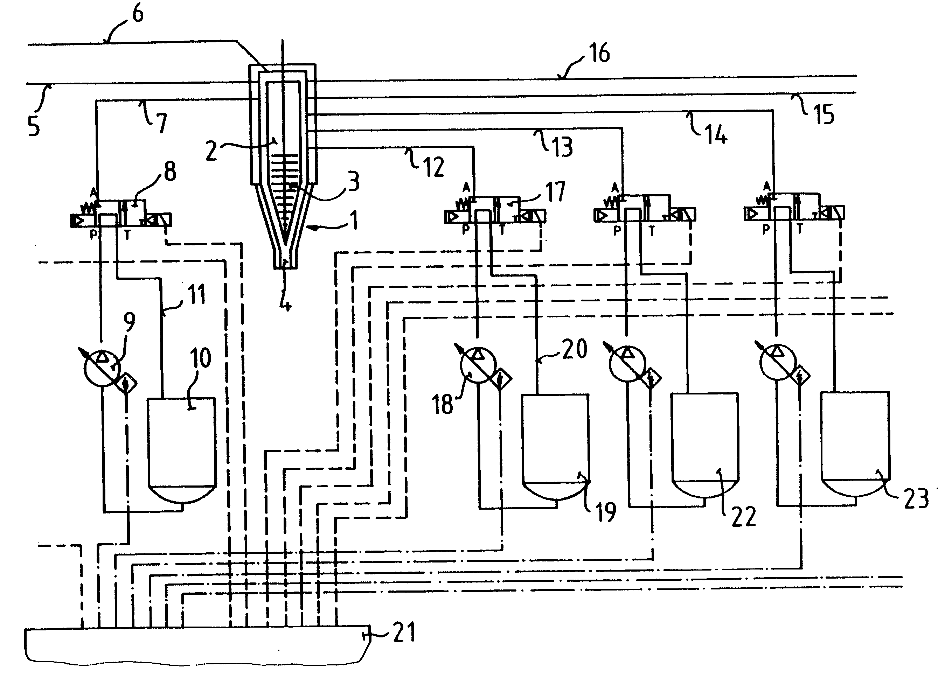

Die in der Zeichnung schematisch dargestellte Vorrichtung weist einen Mischkopf 1 auf, in dessen Mischkammer 2 ein mechanisch angetriebener Rührer 3 angeordnet ist. Bei dieser Ausführungsform handelt es sich also um einen Niederdruckmischkopf. Die Austrittsöffnung für die gemischten und eingefärbten Kunststoffkomponenten ist mit 4 bezeichnet.

In die Mischkammer führen zwei Leitungen 5 und 7 für die beiden Kunststoffkomponenten, bei denen es sich bei dieser Ausführungsform um Polyol und Isocyanat handelt. Für die eine Kunststoffkomponente, die über die Leitung 7 eingeführt wird, sind ein Vorratstank 10, eine Dosierpumpe 9 und ein Umschaltventil 8 dargestellt. Wenn keine Mischung erfolgt, befindet sich das Umschaltventil 8 in der gezeichneten Stellung, d.h. die Komponente führt über eine Rücklaufleitung 11 zurück zum Vorratstank 10. Für die durch die Leitung 5 zugeführte Kunststoffkomponente sind entsprechende Aggregate vorgesehen, die nicht gezeigt sind. Über die Leitung 6 kann ein Spülmittel zugeführt werden.

Weiterhin führen in die Mischkammer 2 bei der dargestellten Ausführungsform fünf Farbleitungen 12, 13, 14, 15 und 16 für fünf verschiedene Grundfarbpigmente.

Die Farbleitung 12 wird von einem Lagerbehälter 19 mit Hilfe einer Fördereinrichtung 18 bedient. Ein Ventil 17 bedient entweder die Farbleitung 12 oder sorgt für die Förderung zurück in den Lagerbehälter 19. Die Mengendosierung für dieses Grundfarbpigment erfolgt mit Hilfe der Fördereinrichtung 18, die entsprechend verstellbar ist. Die Rücklaufleitung für den Lagerbehälter 19 ist mit 20 bezeichnet.

Die Aggregate zur Bedienung der anderen Farbleitungen 13, 14, 15 und 16 sind entsprechend vorhanden. Der Lagerbehälter für die Farbleitung 13 ist mit 22 bezeichnet, und der Lagerbehälter für die Farbleitung 14 ist mit 23 bezeichnet. Die übrigen Aggregate zur Bedienung der Farbleitungen 15 und 16 sind in der Zeichnung nicht mehr dargestellt, da sie denjenigen zur Bedienung der Leitungen 12, 13 und 14 entsprechen.

Eine Steuer- und Regeleinrichtung 21 ermöglicht die Einstellung und Veränderung der Komponenten- und Farbrezepturen.

Die Zeichnung ist eine schematische Darstellung. Bei einer besonders vorteilhaften Ausführungsform münden sämtliche Farbleitungen 12 bis 16 in einer Ebene senkrecht zur Achse der Mischkammer 2 und des Rührers 3 in die Mischkammer, d.h. die einzelnen Grundfarbpigmente treffen in dieser Ebene aufeinander, wodurch eine gleichmäßige und intensive Mischung begünstigt wird. In besonders vorteilhafter Weise münden auch die Leitungen 5 und 7 für die Kunststoffkomponenten in dieser Ebene. Im wesentlichen aus zeichentechnischen Gründen erfolgte eine andere Darstellung in der Zeichnung.

Es ist leicht einzusehen, daß beispielsweise durch die Leitungen 12 und 13 Farbpigmente für die Farben schwarz und weiß eingeführt werden können. Durch die Farbleitungen 14, 15 und 16 können beispielsweise die Farbpigmente für die Komplementärfarben rot, gelb und blau eingeführt werden. Unter Berücksichtigung der allgemeinen Farbenlehre lassen sich bereits aus diesen Farben sämtliche anderen Farben mischen. Entsprechend der Einstellung in der Steuer- und Regeleinrichtung 21 werden die Mengen für die einzelnen in den Leitungen 12 bis 16 zugeführten Farbpigmente im voraus eingestellt, so daß die gewünschten Mengen in die Mischkammer eintreten und dort mit den Kunststoffkomponenten vermischt werden, so daß ein Kunststoffprodukt in genau der gewünschten Farbe entsteht. Diese Farbe kann leicht ohne besonderen Aufwand verstellt werden. Entweder wird die eine oder andere Farbzuführung mit Hilfe der Ventile 17 vollständig unterbrochen oder die Menge wird durch Verstellung der Fördereinrichtung 18 verändert.

Für die Farbmessung sind die unterschiedlichsten Systeme mit Computerauswertung bekannt und im Handel erhältlich. Nach einem Muster kann der Farbton gemessen und die Rezeptur berechnet werden.

In bestimmten Anwendungsfällen kann es durchaus sinnvoll sein, auch vorgemischte Farbpigmente durch eine getrennte Leitung zuzuführen, beispielsweise dann, wenn diese Mischfarbe besonders häufig gewünscht wird. Hierbei handelt es sich beispielsweise um die Farben grün und violett.

Die Anzahl der Farbleitungen, die in die Mischkammer führen, hängt von dem Wunsch des Anwenders für das Verfahren und die Vorrichtung ab.

## Ansprüche

1. Verfahren zum Mischen und Einfärben von Mehrkomponenten-Kunststoffen, insbesondere Polyurethan, bei dem während des Mischens der Kunststoffkomponenten in einer Mischkammer die Farbpigmente zugeführt werden, dadurch gekennzeichnet, daß die den einzelnen Farbton bestimmenden Grundfarbpigmente der Mischkammer getrennt und mit der dem gewünschten Farbton entsprechenden Rezeptur (Mischungsverhältnis) zugeführt werden.

2. Verfahren nach Anspruch 1, dadurch gekennzeichnet, daß die Rezeptur (Mischungsverhältnis) für die einzelnen, den Farbton bestimmenden Grundfarbpigmente vor dem Einführen in die Mischkammer veränderbar ist und vorgewählt wird.

3. Vorrichtung zur Durchführung des Verfahrens nach Anspruch 1 oder 2 mit einer Mischkammer, in die Leitungen für die Kunststoffkomponenten und für die Farbpigmente führen, dadurch gekennzeichnet, daß für jedes einzelne, den Farbton bestimmende Grundfarbpigment eine getrennte Farbleitung (12 bis 16) in die Mischkammer (2) führt, wobei jede dieser Farbleitungen mit einem Lagerbehälter (19) für das entsprechende Grundfarbpigment und mit einer Fördereinrichtung (18) verbunden ist.

4. Vorrichtung nach Anspruch 3, dadurch gekennzeichnet, daß die einzelnen Farbleitungen (12 bis 16) in einer gemeinsamen Ebene senkrecht zur Mischkammerachse in die Mischkammer (2) einmünden.

5. Vorrichtung nach Anspruch 4, dadurch gekennzeichnet, daß in die Ebene, in die die Farbleitungen (12 bis 16) einmünden, auch die Leitungen (5, 7) für die Kunststoffkomponenten einmünden.

6. Vorrichtung nach einem oder mehreren der vorstehenden Ansprüche 3 bis 5, dadurch gekennzeichnet, daß je eine Farbleitung (12 bis 16) für die Grundfarbpigmente der Farben schwarz und weiß sowie für die Komplementärfarben rot, blau und gelb vorhanden ist.

7. Vorrichtung nach Anspruch 6, dadurch gekennzeichnet, daß zusätzlich Farbleitungen für die Farbpigmente der Farben grün und ggf. violett vorgesehen sind.

## Claims

1. A process for mixing and coloring a multi-component plastic, in particular polyurethane, in which the color pigments are added during the mixing of the plastic components in a mixing chamber, which comprises adding the primary color pigments which determine the individual shade to the mixing chamber separately and in the recipe (mixing ratio) corresponding to the desired shade.

2. A process as claimed in claim 1, wherein the recipe (mixing ratio) for the individual primary color pigments which determine the shade is alterable and preselected before the introduction into the mixing chamber.

3. Apparatus for carrying out a process as claimed in claim 1 or 2, comprising a mixing chamber with lines for the plastic components and for the color pigments, wherein for each individual primary color pigment determining the shade a separate color line (12 to 16) leads into the mixing chamber (2), each of these color lines communicating with a storage vessel (19) for the corresponding primary color pigment and with a conveying means (18).

4. Apparatus as claimed in claim 3, wherein the individual color lines (12 to 16) end in the mixing chamber (2) in a common plane perpendicular to the mixing chamber axis.

5. Apparatus as claimed in claim 4, wherein the lines (5, 7) for the plastic components also end in the plane in which the color lines (12 to 16) end.

6. Apparatus as claimed in one or more of the preceding claims 3 to 5, wherein there is one color line each (12 to 16) for the colors black and white and for the complementary colors red, blue and yellow.

7. Apparatus as claimed in claim 6, wherein there is in addition a color line for the color green and optionally also a color line for violet.

## Revendications

1. Procédé pour mélanger et teindre des matières plastiques à multicomposant, en particulier du polyuréthane, dans lequel on amène les pigments colorants dans une chambre de mélange pendant le mélange des composants du plastique, caractérisé par le fait que les différents pigments colorants de base déterminant la teinte sont amenés à la chambre de mélange séparés et selon la formulation (rapport de mélange) correspondant à la teinte souhaitée.

2. Procédé selon la revendication 1, caractérisé par le fait que la formulation (rapport de mélange) pour les différents pigments de base déterminant la teinte est variable et sera présélectionnée avant l'introduction dans la chambre de mélange.

3. Dispositif pour la mise en oeuvre du procédé selon les revendications 1 ou 2, comportant une chambre de mélange dans laquelle mènent des conduites pour les composants de matière plastique et pour les pigments colorants, caractérisé par le fait que, pour chacun des différents pigments de base déterminant la teinte, une conduite de colorant séparée (12 à 16) mène à la chambre de mélange, chacune de ces conduites de colorant étant reliée à un réservoir de stockage (19) pour le pigment de base correspondant et à un moyen de convoyage (18).

4. Dispositif selon la revendication 3, caractérisé par les différentes conduites (12 à 16) débouchent dans la chambre de mélange (2) dans un plan commun perpendiculaire à l'axe de la chambre de mélange.

5. Dispositif selon la revendication 4, caractérisé par le fait que dans le plan dans lequel débouchent les conduites de colorant (12 à 16), débouchent aussi les conduites (5, 7) pour les composants de matière plastique.

6. Dispositif selon l'une des revendications précédentes 3 à 5, caractérisé par le fait qu'il est prévu une conduite respective (12 à 16) pour les pigments de base de couleurs noire et blanche ainsi que pour les couleurs complémentaires rouge, bleu et jaune.

7. Dispositif selon la revendication 6, caractérisé par le fait que des conduites additionnelles sont prévues pour les pigments de couleur verte et éventuellement violette.